# EUROPÄISCHE PATENTSCHRIFT

(11) **EP 4 410 471 B1**
(45) Veröffentlichungstag und Bekanntmachung des Hinweises auf die Patenterteilung: **25.02.2026**
(21) Anmeldenummer: 24157068.8
(22) Anmeldetag: 15.03.2022
(51) Int. Cl.: B23K 35/02, B23K 35/30, C22C 5/06, C22C 5/08

(54) **LOTLEGIERUNG, LÖTPASTE UND LÖTFOLIE MIT EINER SOLCHEN LOTLEGIERUNG**
SOLDER ALLOY, SOLDER PASTE AND SOLDER FOIL USING SUCH SOLDER ALLOY
ALLIAGE DE BRASAGE, PÂTE À BRASER ET FEUILLE DE BRASAGE UTILISANT UN TEL ALLIAGE DE BRASAGE

(30) Priorität: 18.03.2021 DE 102021202673
(43) Veröffentlichungstag der Anmeldung: 07.08.2024
(62) Teilanmeldung aus: 22715981.1
(73) Patentinhaber: MAPAL Dr. Kress SE & Co. KG, 73431 Aalen (DE)
(72) Erfinder: Kommer, Martin, 73460 Hüttlingen (DE); Baumann, Wolfgang, 73485 Unterschneidheim-Zipplingen (DE)
(74) Vertreter: Schrell, Andreas

(56) Entgegenhaltungen:
- JP-A- H1 029 087
- US-A1- 2005 089 440

## Beschreibung

Die Erfindung betrifft eine Lotlegierung, eine Lötpaste mit einer solchen Lotlegierung und eine Lötfolie mit einer solchen Lotlegierung.

US2005089440 offenbart unterschiedliche Indium- und Thallium-haltige Lotlegierungen. JPH1029087A offenbart unterschiedliche Silber-, Kupfer- und Zink-haltige Lotlegierungen.

Beim Hartlöten werden aufgrund entsprechend hoher Schmelzpunkte der verwendeten Lotlegierungen typischerweise Temperaturen von über 650 °C erreicht. Hohe Temperaturen sind dabei insbesondere nötig, um eine ausreichende Scherfestigkeit der entstehenden Lötverbindung zu gewährleisten. Solch hohe Temperaturen sind jedoch für bestimmte Materialien ungünstig. Insbesondere ist für den Werkzeugbereich ungünstig, dass polykristalliner Diamant (PKD) bei solch hohen Temperaturen leidet oder beschädigt wird.

Der Erfindung liegt daher die Aufgabe zugrunde, eine Lotlegierung, eine Lötpaste mit einer solchen Lotlegierung und eine Lötfolie mit einer solchen Lotlegierung zu schaffen, wobei die genannten Nachteile reduziert sind, vorzugsweise nicht auftreten.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Lotlegierung weist vorteilhaft eine vergleichsweise niedrige Schmelztemperatur, insbesondere im Bereich von 545 °C bis höchstens 620 °C auf, und kann daher bei vergleichsweise niedrigen Löttemperaturen, insbesondere von 560 °C bis höchstens 650 °C, angewendet werden. Somit können auch temperaturempfindliche Materialien wie beispielsweise PKD mit der Lotlegierung ohne Gefahr einer Beschädigung verlötet werden. Dabei werden gleichwohl hohe Scherfestigkeiten erreicht, insbesondere von mehr als 1.500 Newton bzw. mehr als 110 MPa, vorzugweise von bis zu 315 MPa.

In bevorzugter Ausgestaltung sind die im Kontext der vorliegenden technischen Lehre genannten Massenanteile an Silber nasschemisch bestimmt, insbesondere durch Fällungstitration, insbesondere gemäß der Norm ISO 11427:2014 in der an dem den Zeitrang des vorliegenden Schutzrechts bestimmenden Tag geltenden Fassung.

In bevorzugter Ausgestaltung sind die Massenanteile der übrigen Elemente im Kontext der vorliegenden technischen Lehre mittels optischer Emissionsspektrometrie mit induktiv gekoppeltem Plasma (ICP-OES) bestimmt, insbesondere gemäß der Norm SOP 2-EM-551 2018-03 in der an dem den Zeitrang des vorliegenden Schutzrechts bestimmenden Tag geltenden Fassung.

Die hier vorgeschlagene Lotlegierung ist frei von Kadmium. Die Lotlegierung ist also eine Cd-freie Lotlegierung.

Die hier vorgeschlagene Lotlegierung ist eine silberbasierte Lotlegierung. Die Lotlegierung ist also i eine Ag-basis-Lotlegierung.

Die hier vorgeschlagene Lotlegierung ist eine Ag-basis, Cd-freie Lotlegierung.

Insbesondere ist die hier vorgeschlagene Lotlegierung vielseitig einsetzbar, insbesondere zum Verbinden von Teilen verschiedenster Materialzusammensetzungen.

Gemäß einer Weiterbildung der Erfindung ist vorgesehen, dass der Massenanteil an Zinn vorzugsweise von mindestens 10 % bis höchstens 13 %, vorzugsweise von mindestens 10,5 % bis höchstens 12,7 %, vorzugsweise von mindestens 11 % bis höchstens 12,5 %, vorzugsweise von mindestens 11,5 % bis höchstens 12 %, vorzugsweise 11,7 % beträgt. In diesen Bereichen verwirklichen sich in besonderer Weise die bereits genannten Vorteile. Insbesondere erweist sich die Lotlegierung als sehr gut zu walzen, wobei sie zugleich wenig spröde ist und eine sehr hohe Scherfestigkeit aufweist. Die Lotlegierung ist frei von Gallium. Zusätzlich ist die Lotlegierung frei von Mangan. Zusätzlich ist die Lotlegierung frei von Nickel. Zusätzlich ist die Lotlegierung frei von Indium.

Die Formulierung "frei von" bedeutet im Kontext der vorliegenden technischen Lehre insbesondere, dass das derart bezeichnete Element höchstens in Spuren vorkommt, vorzugsweise nicht nachweisbar ist und/oder unterhalb der Nachweisgrenze liegt. Der aufsummierte Massenanteil der in Spuren vorkommenden Elemente und Verunreinigungen beträgt höchstens 0,15 %, vorzugsweise höchstens 0,1 %. Vorzugsweise ist der aufsummierte Massenanteil der in Spuren vorkommenden Elemente und Verunreinigungen kleiner als 0,15 %, vorzugsweise kleiner als 0,1 %. Vorzugsweise beträgt der Massenanteil eines in Spuren vorkommenden Elements oder einer Verunreinigung höchstens 0,04 %, vorzugsweise höchstens 0,035 %, vorzugsweise höchstens 0,01 %, vorzugsweise höchstens 0,008 %. Vorzugsweise ist der Massenanteil eines in Spuren vorkommenden Elements oder einer Verunreinigung kleiner als 0,01 %, vorzugsweise kleiner als 0,008 %, vorzugweise kleiner als 0,005 %, vorzugsweise kleiner als 0,002 %, vorzugweise kleiner als 0,001 %.

Im Folgenden werden spezifische bevorzugte Ausführungsbeispiele von Lotlegierungen beschrieben:
Die Erfindung betrifft eine Lotlegierung, bestehend aus, in Massenanteilen:
- von mindestens 54,7 % bis höchstens 58,7 % Silber,
- von mindestens 15,7 % bis höchstens 19,7 % Kupfer,
- von mindestens 11,5 % bis höchstens 15,5 % Zink,
- von mindestens 9,5 %, bis höchstens 13,5 % Zinn,
- bis zu 0.15% Verunreinigungen.

Es wird insbesondere ein weiteres Ausführungsbeispiel der Lotlegierung bevorzugt, bei dem die Lotlegierung besteht aus, in Massenanteilen:
- von mindestens 55,7 % bis höchstens 57,7 % Silber,
- von mindestens 16,7 % bis höchstens 18,7 % Kupfer,
- von mindestens 12,5 % bis höchstens 14,5 % Zink,
- von mindestens 10,5 %, bis höchstens 12,5 % Zinn,
- bis zu 0.15% Verunreinigungen.

Offenbart wird auch eine nicht erfindungsgemäße Lotlegierung, die folgende Zusammensetzung - in Massenanteilen - aufweist:
- 56,7 % Silber,
- 17,7 % Kupfer,
- 13,5 % Zink,
- 11,5 % Zinn,
- restliche Massenanteile bis 100 %: unvermeidbare Verunreinigungen.

### [Versuchsergebnisse]

Im Folgenden werden Versuchsergebnisse für spezifische bevorzugte Ausführungsbeispiele von Lotlegierungen beschrieben:

### [LEGIERUNG T1]

Es wird insbesondere ein weiteres Ausführungsbeispiel der Lotlegierung bevorzugt, bei dem die Lotlegierung folgende Zusammensetzung - in Massenanteilen - aufweist:
- 57 % Silber,
- 18 % Kupfer,
- 14 % Zink,
- 12 % Zinn,
- restliche Massenanteile bis 100 %: unvermeidbare Verunreinigungen.

Für dieses Ausführungsbeispiel der Lotlegierung konnte ein Schmelzbereich von 565 °C bis 610 °C ermittelt werden. Ein Löttemperaturbereich konnte von 575 °C bis 605 °C spezifiziert werden. Für eine Lötverbindung mit der Lotlegierung wurde eine durchschnittliche Scherfestigkeit von 176 MPa ermittelt.

### [LEGIERUNG T2] (nicht erfindungsgemäß)

Es wird eine Lotlegierung offenbart, die folgende Zusammensetzung - in Massenanteilen - aufweist:
- 56 % Silber,
- 18 % Kupfer,
- 15 % Zink,
- 6 % Zinn,
- 4 % Indium,
- restliche Massenanteile bis 100 %: unvermeidbare Verunreinigungen.

Für diese Lotlegierung konnte ein Schmelzbereich von 590 °C bis 615 °C ermittelt werden. Ein Löttemperaturbereich konnte von 605 °C bis 630 °C spezifiziert werden. Für eine Lötverbindung mit der Lotlegierung wurde eine durchschnittliche Scherfestigkeit von 190 MPa ermittelt.

### [LEGIERUNG T3] (nicht erfindungsgemäß)

Es wird eine Lotlegierung offenbart, die folgende Zusammensetzung - in Massenanteilen - aufweist:
- 43 % Silber,
- 16 % Kupfer,
- 23 % Zink,
- 4 % Mangan,
- 4,5 % Nickel,
- 10,5 % Indium,
- restliche Massenanteile bis 100 %: unvermeidbare Verunreinigungen.

Für diese Lotlegierung konnte ein Schmelzbereich von 590 °C bis 615 °C ermittelt werden. Ein Löttemperaturbereich konnte von 615 °C bis 640 °C spezifiziert werden. Für eine Lötverbindung mit der Lotlegierung wurde eine durchschnittliche Scherfestigkeit von 251 MPa ermittelt.

Die Aufgabe wird auch gelöst, indem eine Lötpaste geschaffen wird, die eine erfindungsgemäße Lotlegierung oder eine Lotlegierung nach einem oder mehreren der zuvor beschriebenen Ausführungsbeispiele aufweist. In Zusammenhang mit der Lötpaste ergeben sich insbesondere die Vorteile, die bereits in Zusammenhang mit der Lotlegierung beschrieben wurden.

Die Lötpaste weist bevorzugt zusätzlich zu der Lotlegierung ein Flussmittel, insbesondere Hartlotflussmittel, oder einen Binder auf. Diese Zusatzstoffe beeinflussen die Schmelztemperatur der Lotlegierung und damit im Ergebnis auch der Lötpaste nicht, sondern verdampfen vielmehr beim Löten. Geeignete Flussmittel oder Binder sind für sich genommen bekannt, sodass hierauf nicht weiter im Detail eingegangen wird. Als geeignete Flussmittel kommen allerdings beispielsweise infrage: Ein Flussmittel gemäß DIN EN 1045:1997-08 in der Fassung vom 8. August 1997, Flussmittel FH 10 bis 12, insbesondere 181 PF Atmosin der Castolin GmbH in der an dem den Zeitrang des vorliegenden Schutzrechts bestimmenden Tag erhältlichen Zusammensetzung, 1802 PF Atmosin der Castolin GmbH in der an dem den Zeitrang des vorliegenden Schutzrechts bestimmenden Tag erhältlichen Zusammensetzung, oder BrazeTec h 285 der SAXONIA Technical Materials GmbH in der an dem den Zeitrang des vorliegenden Schutzrechts bestimmenden Tag erhältlichen Zusammensetzung.

Die Aufgabe wird schließlich auch gelöst, indem eine Lötfolie geschaffen wird, die eine erfindungsgemäße Lotlegierung oder eine Lotlegierung nach einem oder mehreren der zuvor beschriebenen Ausführungsbeispiele aufweist. In Zusammenhang mit der Lötfolie ergeben sich insbesondere die Vorteile, die bereits in Zusammenhang mit der Lotlegierung beschrieben wurden.

Insbesondere besteht die Lötfolie bevorzugt aus der Lotlegierung. Insbesondere ist die Lötfolie bevorzugt eine dünn ausgewalzte Folie, die aus der Lotlegierung besteht.

In bevorzugter Ausgestaltung weist die Lötfolie eine Dicke von mindestens 0,1 mm bis höchstens 0,3 mm, vorzugsweise 0,2 mm auf. Alternativ oder zusätzlich weist die Lötfolie bevorzugt eine Breite von mindestens 0,5 cm bis höchstens 15 cm, vorzugsweise von mindestens 1 cm bis höchstens 10 cm, vorzugsweise von mindestens 2 cm bis höchstens 8 cm, vorzugsweise von mindestens 4 cm bis höchstens 6 cm, vorzugsweise 5 cm, auf.

Die Erfindung wird im Folgenden anhand der Zeichnung näher beschrieben. Dabei zeigen:
- Figur 1: eine schematische Darstellung einer Darreichungsform eines Ausführungsbeispiels einer Lötpaste, und
- Figur 2: eine schematische Darstellung einer Darreichungsform eines Ausführungsbeispiels einer Lötfolie.

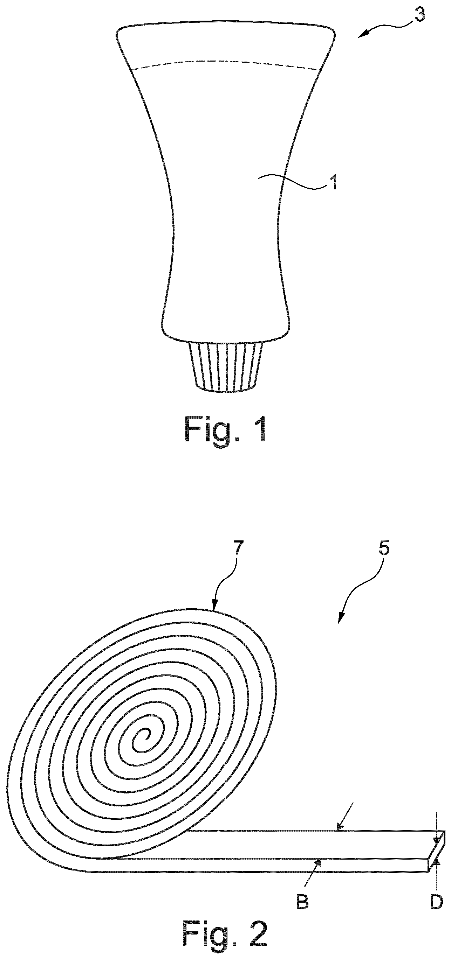

**Fig. 1** zeigt eine schematische Darstellung einer Darreichungsform eines Ausführungsbeispiels einer Lötpaste 1. Die Lötpaste 1 ist hier beispielhaft in einer Tube 3 angeordnet. Die Lötpaste 1 weist eine erfindungsgemäße Lotlegierung oder eine Lotlegierung nach einem oder mehreren der zuvor beschriebenen Ausführungsbeispiele auf. Die Lötpaste weist bevorzugt zusätzlich zu der Lotlegierung ein Flussmittel, insbesondere Hartlotflussmittel, oder einen Binder auf.

**Fig. 2** zeigt eine schematische Darstellung einer Darreichungsform eines Ausführungsbeispiels einer Lötfolie 5. Die Lötfolie 5 ist bevorzugt als dünngewalzte Folie ausgebildet und hier beispielhaft zu einer Rolle oder Spule 7 aufgerollt. Die Lötfolie 5 weist eine erfindungsgemäße Lotlegierung oder eine Lotlegierung nach einem oder mehreren der zuvor beschriebenen Ausführungsbeispiele auf. Insbesondere besteht die Lötfolie 5 aus einer solchen Lotlegierung. In bevorzugter Ausgestaltung weist die Lötfolie 5 eine Dicke D von mindestens 0,1 mm bis höchstens 0,3 mm, vorzugsweise 0,2 mm auf. Alternativ oder zusätzlich weist die Lötfolie 5 bevorzugt eine Breite B von mindestens 0,5 cm bis höchstens 15 cm, vorzugsweise von mindestens 1 cm bis höchstens 10 cm, vorzugsweise von mindestens 2 cm bis höchstens 8 cm, vorzugsweise von mindestens 4 cm bis höchstens 6 cm, vorzugsweise 5 cm, auf.

## Patentansprüche

1. Lotlegierung bestehend aus
- mindestens 54,7 % bis höchstens 58,7 % Silber,
- mindestens 15,7 % bis höchstens 19,7 % Kupfer,
- mindestens 11,5 % bis höchstens 15,5 % Zink,
mindestens 9,5 %, bis höchstens 13,5 % Zinn, jeweils in Massenanteilen, und bis zu 0,15 % Verunreinigungen.

2. Lotlegierung nach Anspruch 1, bestehend aus
- mindestens 55,7 % bis höchstens 57,7 % Silber,
- mindestens 16,7 % bis höchstens 18,7 % Kupfer,
- mindestens 12,5 % bis höchstens 14,5 % Zink,
- mindestens 10,5 %, bis höchstens 12,5 % Zinn, jeweils in Massenanteilen, und bis zu 0,15 % Verunreinigungen.

3. Lötpaste, mit einer Lotlegierung nach einem der Ansprüche 1 oder 2.

4. Lötfolie, mit einer Lotlegierung nach einem der Ansprüche 1 oder 2.

## Claims

1. Solder alloy consisting of
- from at least 54.7 % to at most 58.7 % silver,
- from at least 15.7 % to at most 19.7 % copper,
- from at least 11.5 % to at most 15.5 % zinc,
from at least 9.5 % to at most 13.5 % tin, each in mass fractions, and up to 0.15 % impurities.

2. Solder alloy of claim 1, consisting of
- from at least 55.7 % to at most 57.7 % silver,
- from at least 16.7 % to at most 18.7 % copper,
- from at least 12.5 % to at most 14.5 % zinc,
- from at least 10.5 % to at most 12.5 % tin, each in mass fractions, and up to 0.15 % impurities.

3. Solder paste, with a solder alloy of one of the claims 1 or 2.

4. Solder foil, with a solder alloy of one of the claims 1 or 2.

## Revendications

1. Alliage de brasage composé de
- au moins 54,7% à au plus 58,7% d'argent,
- au moins 15,7% à au plus 19,7% de cuivre,
- au moins 11,5% à au plus 15,5% de zinc,
au moins 9,5% à au plus 13,5% d'étain, à chaque fois en des fractions massiques et jusqu'à 0,15% d'impuretés.

2. Alliage de brasage selon la revendication 1, composé de
- au moins 55,7% à au plus 57,7% d'argent,
- au moins 16,7% à au plus 18,7% de cuivre,
- au moins 12,5% à au plus 14,5% de zinc,
au moins 10,5% à au plus 12,5% d'étain, à chaque fois en des fractions massiques et jusqu'à 0,15% d'impuretés.

3. Pâte à braser avec un alliage de brasage selon l'une des revendications 1 ou 2.

4. Feuille de brasage avec un alliage de brasage selon l'une des revendications 1 ou 2.
